# EUROPEAN PATENT APPLICATION

(11) **EP 2 058 656 A1**
(43) Date of publication of application: **13.05.2009**
(21) Application number: 07790398.7
(22) Date of filing: 27.08.2007
(51) Int. Cl.: G01N 31/00, G01N 21/77, G01N 31/22

(54) **REAGENT FOR LEAD CONCENTRATION DETERMINATION AND METHOD OF DETERMINING LEAD CONCENTRATION**

(30) Priority: 28.08.2006 JP 2006230217
(71) Applicant: Kowa Co., Ltd., Nagoya-shi, Aichi 460-8625 (JP)
(72) Inventor: ASANO, Takaharu, Tsukuba-shi Ibaraki 305-0856 (JP); YABUSAKI, Katsumi, Tsukuba-shi Ibaraki 305-0856 (JP); MIZUSHINA, Keiichi, Tokyo 160-8383 (JP)
(74) Representative: Hartz, Nikolai
(86) International application number: PCT/JP2007/000914
(87) International publication number: WO 2008/026313

(57) **Abstract**

To provide a lead concentration determination reagent which realizes accurate determination of the lead concentration of a sample solution in a simple manner with safety, even when the sample solution contains zinc ions, and a lead concentration determination method making use of the reagent.

The lead concentration determination reagent contains (A) a porphyrin derivative and (B) at least one species selected from among ethylenediamine-N,N'-dipropionic acid, ethylenediamine-N,N'-diacetic acid, and 1,6-diaminohexane-N,N,N',N'-tetraacetic acid.

## Description

### Technical Field

The present invention relates to a reagent for determining lead concentration (hereinafter may be referred to as lead concentration determination reagent), which reagent is used for accurately determining the lead concentration of a sample solution containing zinc ions, and to a method for determining lead concentration (hereinafter may be referred to as lead concentration determination method) by use of the reagent.

### Background Art

In Japan, until the 1970s water pipes had generally been made of lead, since lead is a soft material and can be easily worked. Previously, lead articles were thought to have resistance to dissolution, by virtue of oxide film formed thereon. However, a small amount of lead is actually eluted from lead articles, and such elution became a problem after the 1980s. Thus, in waterworks, stainless steel water pipes have gradually replaced lead water pipes. As has been known, lead itself is very poisonous, and even a trace amount of lead is strongly harmful to the human body, causing malfunction of the nervous system and lead-poisoning symptoms such as anemia, headache, inappetence, and lead colic.
Meanwhile, lead is employed in lead storage batteries, glass/porcelain materials, solders, etc. When these lead-containing products are discharged as municipal wastes and industrial wastes and incinerated in an incineration plant, in some cases, high-concentration lead is detected in the incineration ash and fly ash discharged from the plant. Generally, since the incineration ash and fly ash discharged from incineration plants are often subjected to landfill disposal, there are concerns about environmental pollution caused by elution of lead ions by rainwater around the landfill sites. Therefore, before a landfill operation using incineration ash and fly ash, treatment of lead contained therein as a harmful waste comes to be performed according to the administrative guidance. Under such circumstances, studies have been carried out to develop a lead-elution-preventing agent, a lead treatment method, a method for determining lead concentration of such a lead-containing eluate, etc.

One known method for simply determining lead concentration of water is absorptiometry employing coloring of a reagent for colorimetry (hereinafter referred to as colorimetric agent). In absorptiometry, colorimetric reagents such as porphyrin compounds (Non-Patent Document 1) and porphyrin derivatives (e.g., a porphyrin-introduced polymer) (Patent Document 1) are employed. As has been known, porphyrin derivatives can be employed as agents for determining trace metal, and also realizes determination of lead concentration of an alkaline solution such as an eluate from incineration ash or fly ash.

However, a sample solution such as an eluate from incineration ash or fly ash contains, in addition to lead, zinc ions, which react with a porphyrin derivative serving as a colorimetric reagent and act as an interfering component. Therefore, use of porphyrin derivative encounters difficulty in accurate determination of the lead concentration of an eluate from incineration ash or fly ash.
When the lead concentration of a sample solution containing zinc ions is determined through absorptiometry, the sample solution must be preliminarily treated. For example, an interfering component is separated from lead or masked.

In one known lead concentration determination method including separation of zinc ions (interfering component) from lead, a sample solution to which a complexing agent has been added and whose pH has been adjusted to 5 to 9 is caused to pass through ion-exchange resin, to thereby cause lead to be retained on the ion-exchange resin; a wash solution prepared by adding a complexing agent to purified water and adjusting the pH to 5 to 9 is caused to pass through the ion-exchange resin, to thereby remove the interfering component; dilute hydrochloric acid or dilute nitric acid is caused to pass through the ion-exchange resin, to thereby elute lead; and the lead concentration of the obtained eluate is determined through absorptiometry (Patent Document 2). However, separation of such an interfering substance from lead requires cumbersome operations including ion-exchange resin treatment, which makes the method insufficient as a simple determination method.

Some methods for masking zinc ions as an interfering component are already known. For example, in the determination of the lead concentration of an alkaine sample solution containing zinc and lead through absorptiometry, a cyanide effectively serves as a masking agent for zinc ions. However, cyanides are very poisonous (e.g., causing respiratory failure) and problematic in terms of safety, and must be handled very carefully from use to disposal. Thus, use of cyanide is not practical for generally employed simple analysis.

For the determination, through absorptiometry, of the lead concentration of a sample solution containing calcium ions as an interfering component, there has been disclosed an approach in which calcium ions are added in advance to an aqueous solution of a porphyrin nucleus-incorporated polymer (Patent Document 3). However, the approach cannot be employed in the case where the interfering component is zinc ions, although it is effective for the absorptiometric determination of lead concentration in the presence of calcium ions as an interfering component.
Non-Patent Document 1: "General Catalogue 22nd edition," Dojindo Laboratories, Jan, 2000, p.268-271
Patent Document 1: U.S. Patent No. 6437067
Patent Document 2: JP-A-1997-61416
Patent Document 3: WO/2006/011549

### Disclosure of the Invention

### Problems to be Solved by the Invention

Thus, an object of the present invention is to provide a lead concentration determination reagent which realizes accurate determination of the lead concentration of a sample solution through absorptiometry employing a porphyrin derivative in a simple manner with safety, even when the sample solution contains zinc ions. Another object of the invention is to provide a lead concentration determination method making use of the reagent.

### Means for Solving the Problems

In view of the foregoing, the present inventors have investigated a masking agent for zinc ions which is employed in absorptiometric determination of the lead concentration of a sample solution containing zinc ions by use of a porphyrin derivative serving as a colorimetric reagent, and have found that, among many chelating agents, at least one species selected from among ethylenediamine-N,N'-dipropionic acid (hereinafter may be abbreviated as EDDP), ethylenediamine-N,N'-diacetic acid (hereinafter may be abbreviated as EDDA), and 1,6-diaminohexane-N,N,N',N'-tetraacetic acid (hereinafter may be abbreviated as DAHTA) exhibits an excellent masking effect particularly specific to zinc ions, as compared with other chelating agents, and that, through addition of any of the above-specified chelating agents, the lead concentration of a sample solution containing zinc ions can be accurately determined in a simple manner with safety, without being affected by the zinc ions. The present invention has been accomplished on the basis of these findings.

Accordingly, the present invention provides a reagent for determining lead concentration comprising (A) a porphyrin derivative and (B) at least one species selected from among ethylenediamine-N,N'-dipropionic acid, ethylenediamine-N,N'-diacetic acid, and 1,6-diaminohexane-N,N,N',N'-tetraacetic acid.
The present invention also provides a method for determining lead concentration which comprises mixing the aforementioned lead concentration determination reagent with a sample solution to form a mixture, and determining the absorbance of the mixture.

### Effects of the Invention

The lead concentration determination reagent of the present invention realizes accurate determination of the lead concentration of a sample solution in a simple manner with safety, without being affected by zinc ions present in the solution. Thus, the lead concentration determination reagent is useful for determining the lead concentration of environmental samples such as wastewater, waste liquid, incineration ash, incineration fly ash, molten ash, and electric furnace dust (steel dust).

### Brief Description of the Drawings

[Figure 1] Charts showing masking effects of added chelating agents.
[Figure 2] Charts showing masking effects of added chelating agents.
[Figure 3] A graph showing difference spectra at various EDDA concentrations.
[Figure 4] A graph showing the relationship between the masking agent concentration and peak height.
[Figure 5] A graph showing the lead concentration determination results of lead-zinc mixed solutions.
[Figure 6] A graph showing difference spectra at various EDDA concentration.
[Figure 7] A graph showing the relationship between the masking agent concentration and peak height.
[Figure 8] A graph showing the lead concentration determination results of lead-zinc mixed solutions.
[Figure 9] A graph showing comparison of determination results between a handy lead concentration meter and atomic absorptiometry.

### Best Modes for Carrying Out the Invention

The porphyrin derivative (A) employed in the present invention includes porphyrin species having a porphyrin skeleton and exhibiting change in absorbance of light having a specific wavelength upon reaction with a lead ion. So long as the porphyrin derivative exhibits change in absorbance of light having a specific wavelength upon reaction with a lead ion, examples of the porphyrin derivative include natural occurring porphyrin species such as uroporphyrin, coproporphyrin, and protoporphyrin; porphyrin species having substituents at 1- to 8-positions and/or α- to δ-positions as defined by the Fischer's locant convention; and polymers having structral units derived therefrom. In addition, chlorin and dihydrochlorin, which are porphyrin species in which a pyrrole ring moiety is reduced, and substituted chlorin and substituted dihydrochlorin may also be used.

Specific examples of the porphyrin derivative include (A1) a porphyrin nucleus-incorporated polymer formed through radical copolymerization of a porphyrin compound represented by the following formula (1) or (2): 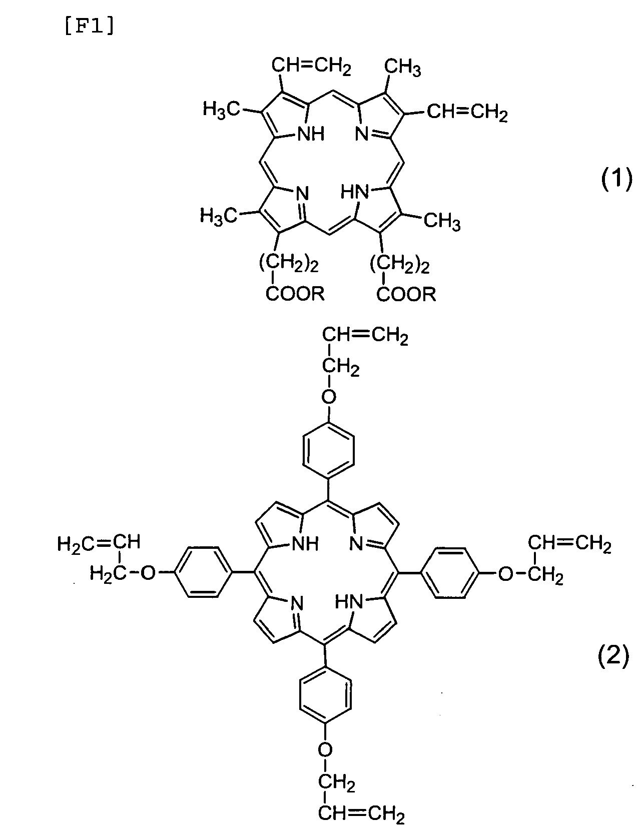 (wherein R represents a hydrogen atom or a C1 to C6 alkyl group) with a vinylenic monomer; and (A2) a porphyrin derivative represented by the following formula (3): 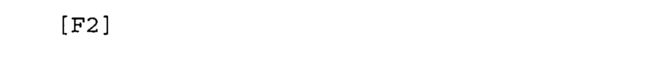 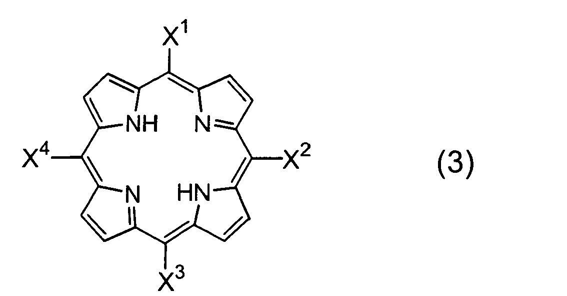 (wherein at least one of X¹ to X⁴, which are identical to or different from one another, represents any of the following formulas: 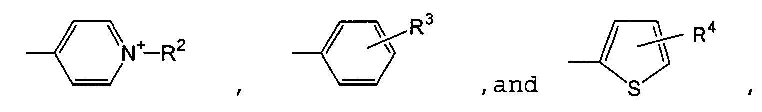 and each of the rest of X¹ to X⁴ represents a hydrogen atom; R² represents a C1 to C6 alkyl group or a C1 to C6 sulfoalkyl group; and each of R³ and R⁴ represents a hydroxyl group, a carboxyl group, a sulfonic acid residue, a phosphoric acid residue, or a trialkylammonium group) or a salt thereof.

### (A1) Porphyrin nucleus-incorporated polymer

The porphyrin nucleus-incorporated polymer of the present invention, which is formed through radical copolymerization of a porphyrin compound represented by formula (1) or (2) and a vinylenic monomer, is produced through a method disclosed in the specification of U.S. Patent No. 6437067. In formula (1), two R groups may be identical to or different from each other. Examples of R include a hydrogen atom, methyl, ethyl, n-propyl, and isopropyl.

Examples of the porphyrin compound represented by formula (1) or (2) and forming the porphyrin nucleus-incorporated polymer include protoporphyrin IX, in which R in formula (1) is a hydrogen atom, protoporphyrin IX dimethyl ester, in which R in formula (1) is a methyl group, and 5,10,15,20-tetrakis(4-(allyloxy)phenyl)-21H,23H-porphyrin represented by formula (2). These porphyrin compounds are commercially available.
The porphyrin compound is preferably protoporphyrin IX (R in formula (1) is a hydrogen atom), and an alkali metal salt thereof, particularly a disodium salt thereof is preferably used in the production of a porphyrin nucleus-incorporated polymer.

The vinylenic monomer for forming the porphyrin nucleus-incorporated polymer may be a monomer having one vinylene group or a monomer having two or more vinylene groups. Specific examples of the monomer having one vinylene group include acrylamide, methacrylic acid, acrylic acid, 5-hexenoic acid, allylamine, 3-butenoic acid, β-methallyl alcohol, allyl alcohol, N,N-dimethylacrylamide, 1-vinylimidazole, 2-vinylpyridine, 4-vinylpyridine, allyl chloride, vinyl acetate, crotonamide, maleic acid, fumaric acid, crotonic acid, isocrotonic acid, trans-1,2-dichloroethylene, citraconic acid, measaconic acid, angelic acid, tiglic acid, and 2-methyl-2-butene. Of these, acrylamide, N,N-dimethylacrylamide, 1-vinylimidazole, vinyl acetate, etc. are preferred as the vinylenic monomer, with acrylamide and N,N-dimethylacrylamide being particularly preferred.

The ratio of employed porphyrin compound to vinylenic monomer (porphyrin compound : vinylenic monomer (by mass)) is preferably 1 : 100 to 1 : 10,000, particularly preferably 1 : 200 to 1 : 1,000.

No particular limitation is imposed on the molecular weight of the porphyrin nucleus-incorporated polymer produced through radical copolymerization of a porphyrin compound and a vinylenic monomer. From the viewpoint of accuracy of lead concentration determination, the average molecular weight measured through the light scattering method is preferably 50,000 to 5,000,000, particularly preferably 100,000 to 1,000,000.

When a vinylenic monomer having one vinylene group and a compound having two or more vinylene groups and serving as a cross-linking agent are employed in combination as vinylenic monomers, which are structural units of the porphyrin nucleus-incorporated polymer employed in the present invention, polymer chains thereof are three-dimensionally cross-linked. Therefore, the polymer can be molded into any shape, and the lead concentration determination reagent of the present invention can be provided in a form other than liquid. For example, the polymer can be molded into any shape suitable for the site where determination is carried out or the assay system; e.g., paste, sheet, film, tube, and beads.

Examples of the compound having two or more vinylene groups and serving as a cross-linking agent include N,N'-methylenebisacrylamide, N,N'-bisacryloylcystamine, divinylbenzene, ethylene glycol diacrylate, tetramethylolmethane tetraacrylate, and trimethylolpropane triacrylate. Among them, N,N'-methylenebisacrylamide, N,N'-bisacryloylcystamine, etc. are preferred.

The compound having two or more vinylene groups and serving as a cross-linking agent is preferably used in an amount of 0.001 to 0.4 times by mass, more preferably 0.02 to 0.2 times by mass, with respect to the vinylenic monomer having one vinylene group. Notably, such monomers having two or more vinylene groups may be used singly.

The lead concentration determination reagent preferably contains a porphyrin nucleus-incorporated polymer represented by formula (1) or (2) in an amount of 1 to 60 mass%, more preferably 5 to 50 mass%, particularly preferably 10 to 30 mass%, from the viewpoint of accuracy of determination of lead contained in a trace amount in a sample solution.

### (A2) Porphyrin derivative represented by formula (3)

The alkyl group represented by R² in formula (3) may be a methyl group, an ethyl group, or an isopropyl group. Among them, a methyl group is particularly preferred. Examples of the sulfoalkyl group include C1 to C6 sulfoalkyl groups such as sulfoethyl and sulfopropyl.

Specific examples of R³ and R⁴ include a hydroxyl group, a carboxyl group, a sulfonic acid residue (-SO₃H), a phosphoric acid residue, and trimethylammonium group.

Examples of preferred groups X¹ to X⁴ include sulfophenyl sulfothienyl, trimethylammoniumphenyl, hydroxyphenyl, carboxyphenyl, phosphorylphenyl, methylpyridinium, and sulfopropylpyridinium. Examples of more preferred such groups include 4-sulfophenyl, 4-sulfothienyl-2-yl, 4-trimethylammoniumphenyl, 4-hydroxyphenyl, 4-carboxyphenyl, 4-phosphorylphenyl, N-methylpyridinium-4-yl, N-methylpyridinium-3-yl, and N-sulfopropylpyridinium-3-yl.

Among the groups X¹ to X⁴, two or more of them each preferably have the aforementioned substituents.
Particularly preferably, four of them each have the aforementioned substituents.

Examples of the salt of the compound represented by formula (3) include alkali metal salts such as sodium salts and potassium salts, and acid addition salts such as hydrochlorides.

Examples of particularly preferred compounds represented by formula (3) include 5,10,15,20-tetraphenyl-21H,23H-porphyrintetrasulfonic acid (hereinafter may be abbreviated as TPPS).

Among the porphyrin derivatives of the present invention represented by formula (3), water-soluble porphyrin species are more preferred. Such porphyrin compounds are already known as colorimetric reagents for the determination of trace metal elements. Such a porphyrin derivative may be produced through, for example, forming tetraphenylporphyrin through dehydration-condensation of pyrrol and benzaldehyde and oxidation with p-chloranil, and sulfonating the phenyl groups of tetraphenylprophyrin in concentrated sulfonic acid (Jonathan S. Lindsey, Irwin C. Schreiman, Henry C. Hsu, Patrick C. Kearney, and Anne M. Marguerettaz, "Rothemund and Adler-Longo reactions revisited: synthesis of tetraphenylporphyrins under equilibrium conditions" J. Org. Chem., 52, 827(1987)). Alternatively, these compounds may also be available as commercial products.

The lead concentration determination reagent preferably contains the porphyrin derivative represented by formula (3) in an amount of 0.01 to 1,000 µmol/L, more preferably 0.1 to 500 µmol/L, particularly preferably 1 to 100 µmol/L, from the viewpoint of accuracy of determination of lead contained in a trace amount in a sample solution.

### (B) Masking agent

In the lead concentration determination reagent of the present invention, ethylenediamine-N,N'-dipropionic acid, ethylenediamine-N,N'-diacetic acid, and 1,6-diaminohexane-N,N,N',N'-tetraacetic acid employed as masking agents for zinc ions are known chelating agents. These chelating agents are produced by many chemical producers, and therefore, commercially available.

Chelating agents including the above three species have been employed in a variety of fields based on the property of forming complexes with various metal ions. Examples of the use thereof include the following: sequestering metal ions which inhibit coloring of fiber and detergency of a detergent; softening of water; removal of harmful metal ions in waste water; prevention of elution of harmful metals; fertilizer ingredients for enhancing efficiency of absorption of trace essential elements; and detoxification of toxic effect of harmful metal ions. These chelating agents are generally employed in a neutral solution and for forming a complex with all or a part of metal ions present. Therefore, in many cases, selective complex formation with a specific metal species is not an important factor.
Even though the metal-selectivity of a chelate compound has been elucidated in a single-component system, the selectivity toward a metal present under high-alkalinity, high-salt-concentration conditions (e.g., ash eluate) is difficult to predict. Thus, it is quite surprising that the aforementioned chelating agents selectively mask zinc ions without considerably affecting lead-causing change in absorbance of a porphyrin derivative.
The zinc-ion-masking agent employed in the lead concentration determination reagent of the present invention is particularly preferably ethylenediamine-N,N'-dipropionic acid.

When containing a porphyrin nucleus-incorporated polymer, the lead concentration determination reagent preferably has an ethylenediamine-N,N'-dipropionic acid content of 0.1 mmol/L to 50 mmol/L, particularly preferably 1 to 20 mmol/L.
When containing a porphyrin nucleus-incorporated polymer, the lead concentration determination reagent preferably has an ethylenediamine-N,N'-diacetic acid content of 0.01 mmol/L to 10 mmol/L, particularly preferably 0.1 to 2 mmol/L.
When containing a porphyrin nucleus-incorporated polymer, the lead concentration determination reagent preferably has a 1,6-diaminohexane-N,N,N',N'-tetraacetic acid content of 0.01 mmol/L to 10 mmol/L, particularly preferably 0.1 to 4 mmol/L.

When containing a porphyrin derivative represented by formula (3), the lead concentration determination reagent preferably has an ethylenediamine-N,N'-dipropionic acid content of 1 mmol/L to 500 mmol/L, particularly preferably 10 to 100 mmol/L.
When containing a porphyrin derivative represented by formula (3), the lead concentration determination reagent preferably has an ethylenediamine-N,N'-diacetic acid content of 0.1 mmol/L to 50 mmol/L, particularly preferably 1 to 20 mmol/L.
When containing a porphyrin derivative represented by formula (3), the lead concentration determination reagent preferably has a 1,6-diaminohexane-N,N,N',N'-tetraacetic acid content of 0.1 mmol/L to 50 mmol/L, particularly preferably 1 to 20 mmol/L.

So long as the effects of the present invention are not impaired, the lead concentration determination reagent of the present invention may contain, in addition to the aforementioned ingredients and water, an optional ingredient employed for determining heavy metal ions in an ordinary solution. Examples of the optional ingredient include pH-adjusting agent, a surfactant, and a masking agent for other metals. These ingredients may be appropriately stored separately or in as a mixture.

Examples of the pH-adjusting agent include N-cyclohexyl-3-aminopropanesulfonic acid, N-cyclohexyl-2-hydroxy-3-aminopropanesulfonic acid, sodium hydrogencarbonate, sodium carbonate, and sodium hydroxide.

Examples of the surfactant include a cationic surfactant, an anionic surfactant, and a non-ionic surfactant.

Examples of the masking agent for other metals include masking agents for metal ions such as copper, cadmium, calcium, iron, cobalt, chromium, magnesium, manganese, and nickel, which affect the reaction between the lead determination reagent of the present invention and lead ions.

The lead concentration determination reagent of the present invention preferably has a pH of 6 to 13, more preferably 6 to 12.5. The determination employing the lead concentration determination reagent is preferably performed under such conditions where the mixture of the lead concentration determination reagent and a sample solution has a pH of 9 to 13, more preferably 10 to 12.5 (25°C). When the lead concentration determination reagent is solid, the pH means a pH of a sample solution after elution of the reagent into the sample solution. When the mixture has a pH outside the pH range, the pH of the lead concentration determination reagent is preferably adjusted with a pH-adjusting agent in advance to fall within the pH range.

The lead concentration determination reagent of the present invention may be in the form of liquid, paste, sheet, film, tube, or beads. From the viewpoint of ease of handling, liquid and sheet are preferred.

The method of the present invention for determining lead concentration comprises mixing the aforementioned lead concentration determination reagent with a sample solution to form a mixture and determining the absorbance of the mixture. Before measurement of absorbance, reaction between the mixture of the reagent and the sample solution is preferably promoted sufficiently; e.g., by heating the mixture. The heating temperature is preferably 30 to 90°C, and the heating time is preferably 1 to 60 min. From the viewpoints of accuracy, sensitivity, and throughput, particularly preferably, the heating time is 60 to 80°C, and the heating time is 3 to 15 min.
Determination of lead concentration of a sample solution by use of the lead concentration determination reagent of the present invention may be performed through, for example, absorptiometry with a calibration curve obtained by use of a standard sample.
The absorbance of a sample is preferably measured at a wavelength of 350 to 700 nm, more preferably 400 to 500 nm, particularly preferably 466 nm, by means of an absorptiometer.

No particular limitation is imposed on the sample whose lead concentration is determined in the present invention. Examples of the sample include environmental samples such as sea water, river water, tap water, industrial wastewater, incineration ash, incineration fly ash, molten ash, electric furnace dust (steel dust), and soil eluate; foods and beverages; agricultural and marine products; plants; drugs; body fluid samples (human and animals) such as blood, saliva, and sperm; organs (human and animals) such as kidney, heart, and brain; and biomaterial samples (human and animals) such as muscle, skin, nerve tissue, hair, and feces.
The sample solution analyzed through the present invention includes non-treated liquid of these samples, extracts, concentrates, and dilutes of the samples obtained through known extraction, concentration, or dilution techniques.
In the lead concentration determination by use of the lead concentration determination reagent of the present invention, the zinc ion concentration of a sample solution is preferably 10 mg/L or lower, particularly preferably 5 mg/L or lower.

### Examples

The present invention will next be described in more detail by way of examples, which should not be construed as limiting the invention thereto.

### Referential Example 1: Synthesis of porphyrin nucleus-incorporated polymer

Protoporphyrin IX disodium salt (91.1 mg) and acrylamide (35.6 g) were dissolved in dimethyl sulfoxide (DMSO), and the total volume of the solution was adjusted to 490 mL. The thus-obtained solution was transferred to a three-neck flask, and 500 mmol/L azobis(isobutyronitrile) (AIBN) (10 mL) was added to the flask. Immediately thereafter, the flask was sealed with a stopper. With stirring under nitrogen, the three-neck flask was immersed in a water-bath at 60°C for initiating polymerization. Four hours after initiation, the formed polymer liquid was gradually added dropwise to a large volume of methanol serving as a precipitating agent. The aggregated/precipitated polymer was recovered, to thereby isolate a porphyrin nucleus-incorporated polymer. The polymer was dissolved in pure water, and the solution was added again to methanol for purification.

### Example 1: Selection of masking agents

The porphyrin nucleus-incorporated polymer was dissolved in ultrapure water. The concentration of the polymer was adjusted such that the absorbance at 466 nm (blank: water) of a 2-fold diluted sample fell within a range of 0.7 to 0.8. The thus-produced solution and 1 mol/L calcium chloride solution were mixed at a ratio of 64 : 1, to thereby provide a porphyrin polymer-containing lead concentration determination reagent.

Separately, a lead-zinc mixed solution, which contained lead (2.5 µmol/L) and zinc (2.5 µmol/L) and had a pH of 12 (adjusted by CAPS buffer) was provided as a test solution.

A 10-fold diluted (with pure water) porphyrin polymer-containing lead concentration determination reagent (250 µL), the lead-zinc mixed solution (250 µL), and each of the chelating agents shown in Table 1 having different concentrations (100 mM or less) (25 µL) were mixed to give a solution. The pH of the solutions after mixing fell within a range of 10 to 12.5. Each solution was heated at 75°C for 5 min, and the absorption spectrum was measured by means of a UV-Vis spectrometer. In a similar manner, the diluted porphyrin polymer-containing lead concentration determination reagent, the lead-zinc mixed solution, and pure water were mixed at the same proportions and heated, and the absorption spectrum of the solution was measured. In each of the above cases, a change in absorption spectrum-difference spectrum-attributed to formation of porphyrin-lead complex and porphyrin-zinc complex was obtained through subtraction of a base (metal-free) spectrum. In the case of the porphyrin polymer-containing lead concentration determination reagent, the lead-porphyrin complex exhibits a difference spectrum peak at about 466 nm, and the zinc-porphyrin complex exhibits a difference spectrum peak at about 415 nm. Therefore, when a lead-zinc mixed solution is reacted, peaks must appear at 415 nm and 466 nm. However, when a metal is masked with the added chelating agent, the masked metal species cannot react with porphyrin, and the corresponding peak height decreases. Therefore, through checking which peak height has decreased, the selectivity of the masking effect of the tested chelating agent can be evaluated.

A similar test was performed for a water-soluble porphyrin-containing lead concentration determination reagent. Specifically, 5,10,15,20-tetraphenyl-21H,23H-porphyrintetrasulfonic acid·2H₂SO₄·4H₂O (hereinafter abbreviated as TPPS), which is a water-soluble porphyrin, (10 µM) and calcium chloride (4.4 mM) were dissolved in CAPS buffer having a pH adjusted to 12, to thereby provide a water-soluble porphyrin-containing lead concentration determination reagent. Subsequently, the water-soluble porphyrin-containing lead concentration determination reagent (250 µL), the lead-zinc mixed solution (250 µL), and each of the chelating agents shown in Table 1 having different concentrations (100 mM or less) (25 µL) were mixed to give a solution. The pH of the solutions after mixing fell within a range of 10 to 12.5. Each solution was heated at 75°C for 5 min, and the absorption spectrum was measured by means of a UV-Vis spectrometer. In a similar manner, the water-soluble porphyrin-containing lead concentration determination reagent, the lead-zinc mixed solution, and pure water were mixed at the same proportions and heated, and the absorption spectrum of the solution was measured. In each of the above cases, a change in absorption spectrum-difference spectrum-attributed to formation of porphyrin-lead complex and porphyrin-zinc complex was obtained through subtraction of a base (metal-free) spectrum. In the case of the water-soluble porphyrin-containing lead concentration determination reagent, the lead-porphyrin complex exhibits a difference spectrum peak at about 465 nm, and the zinc-porphyrin complex exhibits a difference spectrum peak at about 423 nm. Similar to the case of the porphyrin polymer-containing lead concentration determination reagent, through checking which peak height has decreased, the selectivity of the masking effect of the tested chelating agent can be evaluated.

**[Table 1]**

| Abbreviation | Compound |
|---|---|
| 15-Crown-5 | 4-aryloylamidobenzo-15-crown-5 |
| 18-Crown-6 | 4-aryloylamidobenzo-18-crown-6 |
| DAHTA | 1,6-diaminohexane-N,N,N',N'-tetraacetic acid |
| DPTA-OH | 1,3-diamino-2-hydroxypropane-N,N,N',N'-tetraacetic acid |
| DTPA | diethylenetriamine-N,N,N',N",N"-pentaacetic acid |
| EDDA | ethylenediamine-N,N'-diacetic acid |
| EDDP | ethylenediamine-N,N'-dipropionic acid |
| EDTA | ethylenediamine-N,N,N',N'-tetraacetic acid |
| EDTPO | N,N,N',N'-ethylenediamine-tetra(methylene-phosphoric acid) |
| EGTA | O,O'-bis(2-aminoethyl)ethylene glycol-N,N,N',N'-tetraacetic acid |
| IDA | iminodiacetic acid |
| Imidazole | imidazole |
| NTA | nitrilotriacetic acid |
| NTP | 3,3',3"-nitrilotripropionic acid |
| NIPO | nitrilotris(methylenephosphoric acid) |
| o-ph | o-phenanthroline |

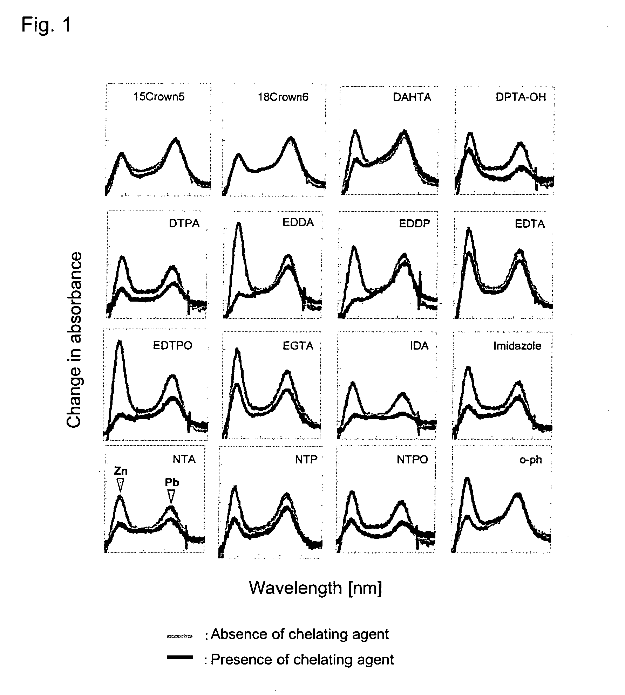

Figure 1 shows difference spectra of a mixture of a porphyrin polymer-containing lead concentration determination reagent with water and with each chelating agent. Since the concentration at which the masking effect is exerted varies depending on the type of chelating agent, the difference spectra of each chart were measured when the peak attributed to zinc or lead changed. Crown ethers (15-Crown-5 and 18-Crown-6) are thought to serve as selective metal scavengers. However, these crown ethers exhibited no masking effect due to poor solubility in an aqueous medium. o-Phenanthroline is a known zinc masking agent working in a neutral pH range; however, no masking effect was observed in an alkali region, and rather contributed to an increase in the peak attributed to zinc. The chelating agents other than DAHTA, EDDA, and EDDP decreased both the zinc peak and the lead peak, indicating that these chelating agents masked both zinc and lead. In contrast, when DAHTA, EDDA, or EDDP was added, only the zinc peak considerably decreased, indicating that the three masking agents selectively masked zinc.

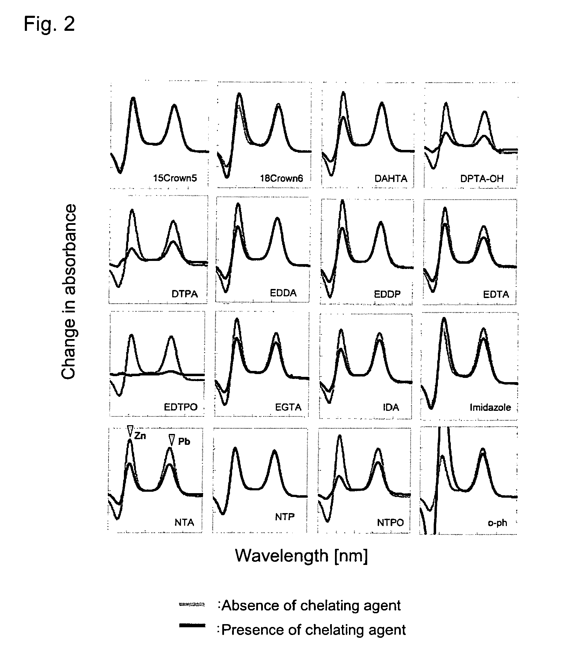

Figure 2 shows difference spectra of a mixture of a water-soluble porphyrin-containing lead concentration determination reagent with water and with each chelating agent. Crown ethers and NTP exhibited no masking effect. o-Phenanthroline and imidazole increased the zinc peak, and no masking agent effect was observed. The chelating agents other than DAHTA, EDDA, and EDDP decreased both the zinc peak and the lead peak, indicating that these chelating agents masked both zinc and lead. In contrast, when DAHTA, EDDA, or EDDP was added, only the zinc peak considerably decreased, indicating that the three masking agents selectively masked zinc.

### Example 2: Study on optimum concentration of zinc masking agent in the porphyrin polymer-containing lead concentration determination reagent

In Example 1, DAHTA, EDDA, and EDDP were selectively bound to zinc in a lead-zinc mixed solution. However, when such a masking agent is added at a very high concentration or when a sample solution to be analyzed contains lead alone as a metal, the masking agent is thought to mask both zinc and lead. Thus, in Example 2, porphyrin polymer-containing lead concentration determination reagents (falling within the scope of the invention) containing DAHTA, EDDA, or EDDP at different concentrations were provided. Each reagent was added to a sample solution containing lead alone as a metal and the mixture was analyzed by means of a handy lead concentration meter.

The handy lead concentration meter includes a small-scale spectrometer and a heater for heating cells and is able to provide an absorption spectrum immediately after a sample cell is placed in the apparatus and after reaction of the solution is promoted in the cell through heating (75°C) for 5 minutes. In the spectra measured at different times, peaks having a height corresponding to lead concentration are observed at 466 nm. Through comparison of the spectra with those obtained in the case where a lead solution having a known lead concentration is reacted, the lead concentration of the sample solution is calculated. The calculation is carried out by use of specialized software after appropriate normalization of the relevant absorption spectra.

In actual procedure, each of the porphyrin polymer-containing lead concentration determination reagents containing different types and concentrations of masking agents (pH: 6 to 12.5) (500 µL) was mixed with a 0.3 mg/L aqueous lead solution (dissolved in CAPS buffer (pH: 12)) (500 µL) to give a solution. The pH of the solutions after mixing fell within a range of 10 to 12.5. Each sample was set in a handy lead concentration meter, and the absorption spectrum was measured.

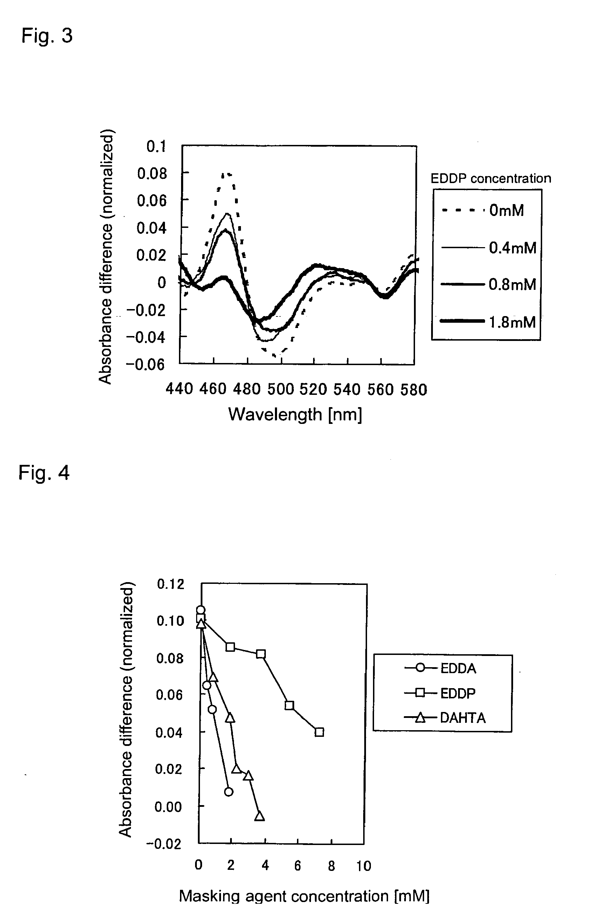

Figure 3 shows examples of difference spectrum as measured when the EDDA concentration was varied. As the EDDA concentration increased, the height of the peak attributed to lead decreased. Figure 4 shows the changes in peak height when the concentration of DAHTA, EDDA, or EDDP was varied.
In each case, the peak height decreased in response to the masking agent concentration. Therefore, the masking agent cannot be added at an excessively high concentration and must be added in an appropriate amount in consideration of allowable sensitivity. Also, when EDDP was added at high concentration, no significant decrease in peak height was observed. Through the experiment, the upper limits of concentration of DAHTA, EDDA, and EDDP added were determined as about 2 mM, about 4 mM, and about 10 mM, respectively. In the case where an analyst has recognized the presence of zinc in a sample, a masking agent can be incorporated at a higher concentration into the sample.

### Example 3: Determination of lead concentration of a lead-zinc mixed solution making use of a porphyrin polymer-containing lead concentration determination reagent with a masking agent (1) Preparation of lead concentration determination reagents

A porphyrin nucleus-incorporated polymer was dissolved in ultrapure water. The concentration of the polymer was adjusted such that the absorbance at 466 nm (blank: water) of a 2-fold diluted sample fell within a range of 0.7 to 0.8. The thus-produced solution and 1 mol/L calcium chloride solution were mixed at a ratio of 65 : 1. The thus-obtained solution and a 15 mmol/L aqueous DAHTA solution were mixed at 10 : 1 (by volume), to thereby prepare a porphyrin polymer-containing lead concentration determination reagent of the present invention (pH: 10). In a similar manner, the polymer solution and a 6 mmol/L aqueous EDDA solution were mixed at 10 : 1 (by volume), to thereby prepare another porphyrin polymer-containing lead concentration determination reagent of the present invention (pH: 10). Also, the polymer solution and a 50 mmol/L aqueous EDDP solution were mixed at 10 : 1 (by volume), to thereby prepare still another porphyrin polymer-containing lead concentration determination reagent of the present invention (pH: 8). A comparative porphyrin polymer-containing lead concentration determination reagent (pH: 5.4) was prepared by mixing the polymer solution and pure water at 10 : 1 (by volume).

### (2) Preparation of lead-zinc mixed solution

Zinc sulfate was dissolved in an alkaline aqueous solution (pH: 12) containing CAPS buffer, whereby aqueous zinc solutions having different zinc concentrations were provided. A 50 mg/L (approximate concentration) aqueous lead solution (1 mass% of the resultant mixture) was added to the zinc solutions, whereby alkaline lead-zinc mixed solutions having a constant lead concentration (0.52 mg/L) and different zinc concentrations (0 to about 10 mg/L) were prepared as test solutions.

### (3) Measurement

In a manner similar to that of Example 2, the lead concentration of the test solution making use of the porphyrin polymer-containing lead concentration determination reagent of the present invention was performed by means of a handy lead concentration meter. Specifically, each porphyrin polymer-containing lead concentration determination reagent of the present invention (500 µL) and a test solution (500 µL) were mixed. The pH of the solutions after mixing fell within a range of 10 to 12.5. Each sample was set in a handy lead concentration meter, and the absorption spectrum was measured. Separately, the lead concentration and zinc concentration of the test solutions were determined by means of an atomic absorption photometer.

### (4) Results

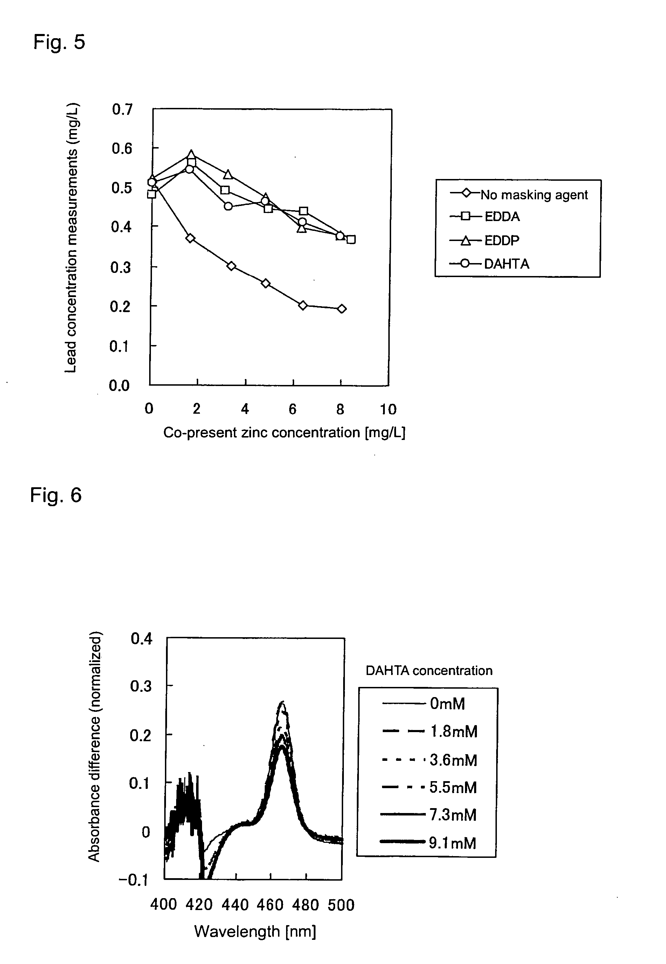

Figure 5 is a graph showing the results of lead concentration measurement of lead-zinc mixed solutions by means of a handy lead concentration meter. In the graph, the horizontal axis represents the co-present zinc concentration determined by means of an atomic absorption photometer. When a comparative porphyrin polymer-containing lead concentration determination reagent containing no masking agent was employed, the calculated lead concentration decreased drastically with increasing concentration of the co-present zinc. Thus, even when the co-present zinc concentration was low, the lead concentration could not be accurately determined. In contrast, when a lead concentration determination reagent containing a masking agent (DAHTA, EDDA, or EDDP) was employed, the calculated lead concentration values were thought to have accuracy, even when zinc ions were co-present. On condition that a lead concentration value lower by 10% is allowed, the allowable co-present zinc concentration is estimated to about 1 mg/L or lower, when a comparative porphyrin-polymer lead concentration determination reagent is employed. However, when a porphyrin polymer-containing lead concentration determination reagent containing a masking agent was employed, the lead concentration could be determined, even when zinc was present at a concentration of 0 to about 5 mg/L.

### Example 4: Study on optimum concentration of zinc masking agent in the water-soluble porphyrin-containing lead concentration determination reagent

Similar to the case of the porphyrin polymer-containing lead concentration determination reagent, excessive addition of DAHTA, EDDA, or EDDP is thought to result in masking lead, when a water-soluble porphyrin-containing lead concentration determination reagent is employed.
In Example 4, water-soluble porphyrin-containing lead concentration determination reagents falling within the scope of the invention (pH: 6 to 12.5) were provided, which include CAPS buffer (pH: 12), 30µM TPPS, 4.4mM calcium chloride, and different concentrations of masking agents (DAHTA, EDDA, or EDDP).
Each of the water-soluble porphyrin-containing lead concentration determination reagents (250 µL) was mixed with a 0.3 mg/L aqueous lead solution (dissolved in CAPS buffer (pH: 12)) (250 µL) to give a solution. The pH of the solutions after mixing fell within a range of 10 to 12.5. Each solution was heated at 75°C for 5 min, and the absorption spectrum was measured by means of a UV-Vis spectrometer. The absorption spectra of similar test solutions but containing no metal ions were measured, whereby the corresponding difference spectra were obtained.

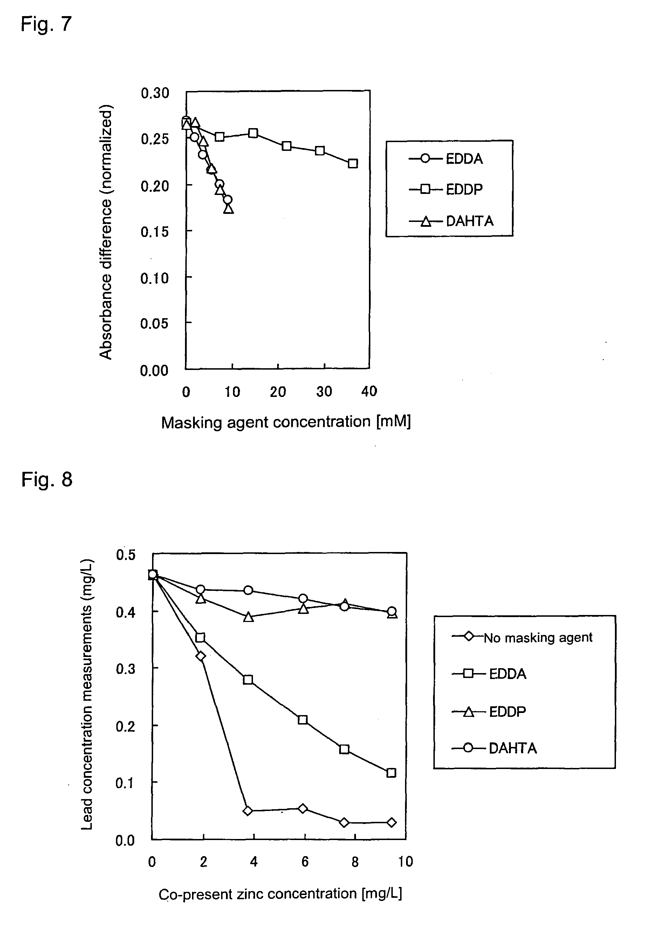

Figure 6 is a chart showing examples of difference spectrum obtained through variation of the DAHTA concentration. As shown in Figure 6, when the DAHTA concentration increased, the height of the peak attributed to lead decreased. Figure 7 shows the changes in peak height when the concentration of DAHTA, EDDA, or EDDP was varied. In each case, the peak height decreased with increasing concentration of the masking agent, indicating that the masking agent cannot be added at an excessively high concentration and must be added in an appropriate amount in consideration of allowable sensitivity. Also, when EDDP was added at high concentration, no significant descrease in peak height was observed. Through the experiment, the upper limits of concentration of DAHTA, EDDA, and EDDP added were determined as about 20 mM, about 20 mM, and about 100 mM, respectively. In the case where an analyst has recognized the presence of zinc in a sample, a masking agent can be incorporated at a higher concentration into the sample.

### Example 5: Determination of lead concentration of a lead-zinc mixed solution making use of a water-soluble porphyrin-containing lead concentration determination reagent containing a masking agent

### (1) Preparation of water-soluble porphyrin-containing lead concentration determination reagents

A water-soluble porphyrin (TPPS) (30 µM), calcium chloride (4.4 mM), and DAHTA (10 mM) were added to CAPS buffer (pH: 12), to thereby provide a water-soluble porphyrin-containing lead concentration determination reagent of the present invention. In a similar manner, TPPS (30 µM), calcium chloride (4.4 mM), and EDDA (10 mM) were added to CAPS buffer (pH: 12), to thereby provide another water-soluble porphyrin-containing lead concentration determination reagent of the present invention. Also, a water-soluble porphyrin (TPPS) (30 µM), calcium chloride (4.4 mM), and EDDP (40 mM) were added to CAPS buffer (pH: 12), to thereby provide still another water-soluble porphyrin-containing lead concentration determination reagent of the present invention. A comparative water-soluble porphyrin-containing lead concentration determination reagent containing no masking agent was also provided.

### (2) Preparation of lead-zinc mixed solution

Zinc sulfate was dissolved in an aqueous alkaline solution containing CAPS buffer, whereby aqueous zinc solutions having different zinc concentrations were provided. A 50 mg/L (approximate concentration) aqueous lead solution (1 mass% of the resultant mixture) was added to the zinc aqueous solutions, whereby alkaline lead-zinc mixed solutions having a constant lead concentration (0.46 mg/L) and different zinc concentrations (0 to about 10 mg/L) were prepared as test solutions.

### (3) Measurement

Each of the water-soluble porphyrin-containing lead concentration determination reagents (250 µL) and a test solution (250 µL) were mixed in a sampling tube, to give a solution. The pH of the solutions after mixing fell within a range of 10 to 12.5. Each solution was heated at 75°C for 5 min and then transferred to a 1-cm cuvette cell. The absorption spectrum was measured by means of a UV-Vis spectrometer. The absorption spectra of similar aqueous test solutions but containing no metal ions were also measured, whereby the corresponding difference spectra were obtained. The value at 466 nm in each difference spectrum was input to a calibration curve obtained from test solutions having known lead concentrations, to thereby calculate the lead concentration of the sample. Separately, the lead concentration and zinc concentration of the test solutions were determined by means of an atomic absorption photometer.

### (4) Results

Figure 8 is a graph showing the results of lead concentration measurement of lead-zinc mixed solutions. In the graph, the horizontal axis represents the co-present zinc concentration determined by means of an atomic absorption photometer. When a comparative water-soluble porphyrin-containing lead concentration determination reagent containing no masking agent was employed, the calculated lead concentration decreased drastically with increasing concentration of the co-present zinc. Thus, even when the co-present zinc concentration was low, the lead concentration could not be accurately determined. In contrast, when a water-soluble porphyrin-containing lead concentration determination reagent containing a masking agent (DAHTA, EDDA, or EDDP) was employed, the calculated lead concentration values were thought to have accuracy, even when zinc ions were co-present. This effect was attained to a considerable extent, particularly when DAHTA or EDDP was employed. On condition that a lead concentration value lower by 10% is allowed, the allowable co-present zinc concentration is estimated to about 1 mg/L or lower, when a comparative water-soluble porphyrin-containing lead concentration determination reagent is employed. However, when a water-soluble porphyrin-containing lead concentration determination reagent containing DAHTA or EDDP was employed, the lead concentration could be determined, even when zinc was present at a concentration of 0 to about 10 mg/L.

### Example 6: Analysis of ash eluate by use of a porphyrin polymer-containing lead concentration determination agent containing a zinc masking agent

### (1) Preparation of lead concentration determination reagent

An aqueous solution containing the porphyrin nucleus-incorporated polymer, calcium chloride (13 mM), and EDDP (1.8 mM) was provided to serve as a porphyrin polymer-containing lead concentration determination reagent (pH: 8) containing a zinc masking agent. The concentration of the porphyrin nucleus-incorporated polymer was adjusted such that the absorbance of a 2-fold diluted sample fell within a range of 0.7 to 0.8.

### (2) Provision of samples

Incineration ash was sampled from incineration plants located at various sites, and an ash eluate was prepared from each ash sample according to test method No. 13, designated by the Ministry of the Environment. Specifically, ash and distilled water were mixed at 1 : 10 (by weight), and the mixture was shaken for six hours, followed by filtration. From these ash eluate samples, 26 samples having a lead concentration of 1 mg/L or lower (i.e., original liquid can be assayed by means of a handy lead concentration meter) and a pH of 12 or higher (i.e., highly alkaline solution) were selected to serve as test samples.

### (3) Measuring method

The lead concentration of each ash eluate sample was determined by use of the porphyrin polymer-containing lead concentration determination reagent of the present invention containing a zinc masking agent and by means of a handy lead concentration meter. All mixtures of the porphyrin polymer-containing lead concentration determination reagent and an ash eluate had a pH of 10 to 12.5. Separately, the lead concentration was also determined through atomic absorption spectrometry. For comparison, the same sample was analyzed by use of a porphyrin polymer-containing lead concentration determination reagent containing no masking agent.

### (4) Results

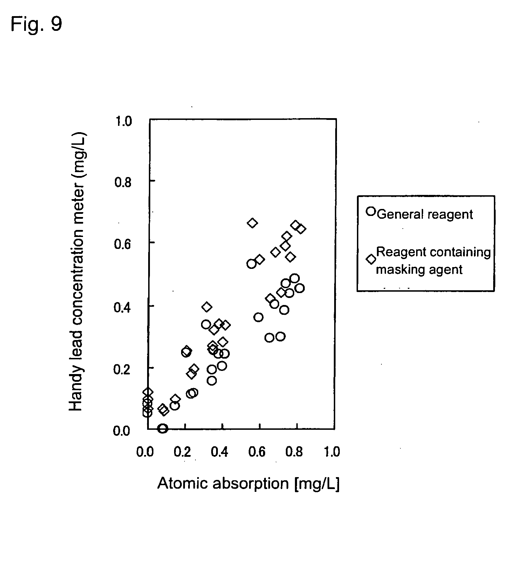

Figure 9 shows the correlation of measurements obtained by means of a handy lead concentration meter to those obtained through atomic absorption. As is clear from Figure 9, the measurements obtained by means of a handy lead concentration meter are generally lower than those obtained through atomic absorption. In the case where a masking agent is present, the obtained measurements are closer to those obtained through atomic absorption than the case where no masking agent is present.

## Claims

1. A reagent for determining lead concentration comprising (A) a porphyrin derivative and (B) at least one species selected from among ethylenediamine-N,N'-dipropionic acid, ethylenediamine-N,N'-diacetic acid, and 1,6-diaminohexane-N,N,N',N'-tetraacetic acid.

2. A reagent for determining lead concentration according to claim 1, wherein the porphyrin derivative (A) is (A1) a porphyrin nucleus-incorporated polymer formed through radical copolymerization of a porphyrin compound represented by the following formula (1) or (2): 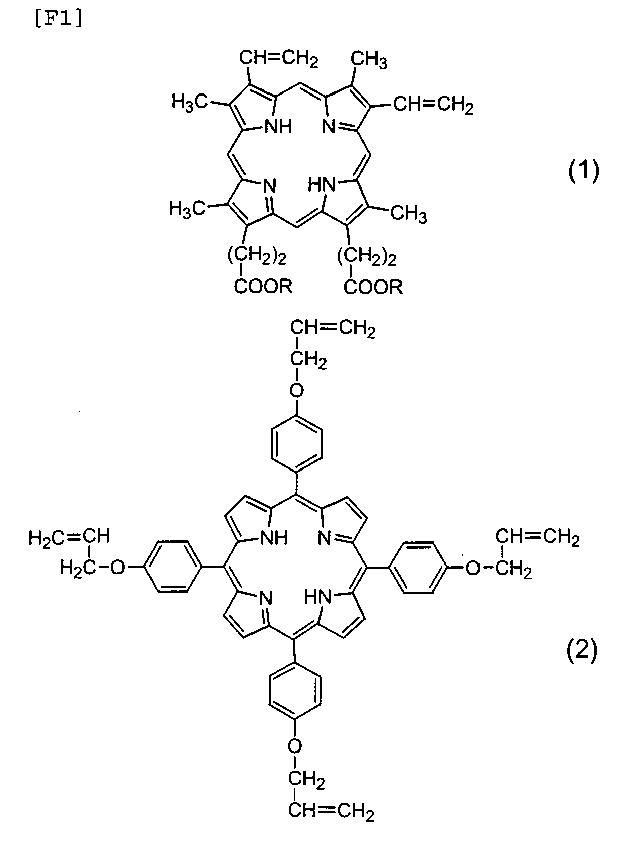 wherein R represents a hydrogen atom or a C1 to C6 alkyl group, with a vinylenic monomer; or (A2) a porphyrin derivative represented by the following formula (3): 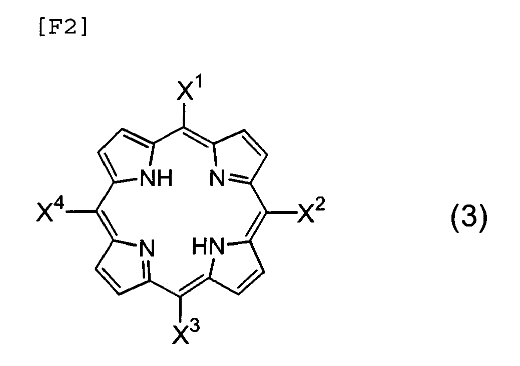 wherein at least one of X¹ to X⁴, which are identical to or different from one another, represents any of the following formulas: 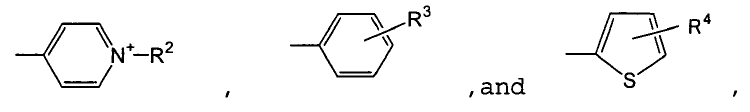 and each of the rest of X¹ to X⁴ represents a hydrogen atom; R² represents a C1 to C6 alkyl group or a C1 to C6 sulfoalkyl group; and each of R³ and R⁴ represents a hydroxyl group, a carboxyl group, a sulfonic acid residue, a phosphoric acid residue, or a trialkylammonium group, or a salt thereof.

3. A reagent for determining lead concentration according to claim 1 or 2, wherein the component (B) comprises at least one species selected from among 1 to 100 mmol/L of ethylenediamine-N,N'-dipropionic acid, 0.1 to 20 mmol/L of ethylenediamine-N,N'-diacetic acid, and 0.1 to 20 mmol/L of 1,6-diaminohexane-N,N,N',N'-tetraacetic acid.

4. A reagent for determining lead concentration according to any one of claims 1 to 3, wherein the component (B) is ethylenediamine-N,N'-dipropionic acid.

5. A reagent for determining lead concentration according to any one of claims 1 to 4, which has a pH of 6 to 13.0.

6. A method for determining lead concentration, comprising mixing a reagent for determining lead concentration according to any one of claims 1 to 5 with a sample solution to form a mixture, and determining an absorbance of the mixture.

7. A method for determining lead concentration according to claim 6, wherein the mixture of the reagent for determining lead concentration and the sample solution has a pH of 9 to 13.0.
